# EUROPEAN PATENT APPLICATION

(11) **EP 4 826 894 A2**
(43) Date of publication of application: **21.10.2026**
(21) Application number: 26202846.7
(22) Date of filing: 30.09.2025
(51) Int. Cl.: H01M 50/536

(54) **POWER STORAGE CELL**

(30) Priority: 22.10.2024 JP 2024185897
(62) Document number(s) of the earlier application(s) in accordance with Art. 76 EPC: 25205830.0 / 4 734 261
(71) Applicant: Toyota Jidosha Kabushiki Kaisha, Toyota-shi, Aichi-ken 471-8571 (JP)
(72) Inventor: CHIHARA, Masashi, Toyota-shi, 471-8571 (JP); SHIMURA, Yosuke, Toyota-shi, 471-8571 (JP); KAKISHITA, Kenichi, Toyota-shi, 471-8571 (JP); NAKASHIMA, Satoshi, Toyota-shi, 471-8571 (JP); AWANO, Hiroki, Toyota-shi, 471-8571 (JP); NAGANO, Yasuaki, Kosai-shi, 431-0422 (JP); OGURA, Masaya, Kosai-shi, 431-0422 (JP); SATO, Ryosuke, Kosai-shi, 431-0422 (JP)
(74) Representative: Kuhnen & Wacker Patent- und Rechtsanwaltsbüro PartG mbB

(57) **Abstract**

A power storage cell (100) includes: an electrode body (10) including a first electrode (10A) and a second electrode (10B); a first coupling member (50A) and a second coupling member (50B) each disposed at a position facing the electrode body (10); a first tab (90A) that electrically connects the first electrode (10A) to the first coupling member (50A); and a foam layer (140). The foam layer (140) is in contact with the first tab (90A), to thereby support the first tab (90A).

## Description

### BACKGROUND

### Field

The present disclosure relates to a power storage cell.

### Description of the Background Art

Japanese National Patent Publication JP 2023-547686 A discloses a battery cell including an electrode assembly, an adapting piece, and a tab. The tab extends from the electrode assembly toward the adapting piece and is connected to the adapting piece. A power storage cell according to the preamble of claim 1 is known from KR 2016-0014916 A and JPWO 2019/150903 A1.

### SUMMARY

In the above-referenced JP 2023-547686 A, the tab (electrode tab) connects the electrode assembly (electrode body) to the adapting piece (current collector plate), as described above. In such a configuration, an external force such as a tensile force or a torsional force may be applied to the tab when the power storage cell vibrates, resulting in damage to the tab.

The present disclosure has been made to solve the above-described problem, and an object of the present disclosure is to provide a power storage cell capable of suppressing damage to an electrode tab.

A power storage cell according to an aspect of the present disclosure includes: an electrode body including an electrode sheet; a current collector plate disposed at a position facing the electrode body; at least one electrode tab that electrically connects the electrode sheet to the current collector plate; and a foam layer including a foam body. The foam layer is in contact with the at least one electrode tab, to thereby support the at least one electrode tab. The foam body includes a fire extinguishing gas.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 shows a configuration of a vehicle having a power storage device mounted thereon.
Fig. 2 is a perspective view showing configurations of the power storage device and a frame member.
Fig. 3 is a cross-sectional view taken along line III-III in Fig. 2.
Fig. 4 is a perspective view showing a configuration of a power storage cell according to a first embodiment.
Fig. 5 is an exploded perspective view showing the configuration of the power storage cell according to the first embodiment.
Fig. 6 is a cross-sectional view as seen in the direction of arrows VI-VI in Fig. 4.
Fig. 7 is a cross-sectional view as seen in the direction of arrows VII-VII in Fig. 6.
Fig. 8 is a partially enlarged cross-sectional view showing configurations of a first electrode and a first tab according to the first embodiment.
Fig. 9 is a partially enlarged cross-sectional view showing a configuration of a second electrode.
Fig. 10 is a schematic cross-sectional view as seen in the direction of arrows X-X in Fig. 6.
Fig. 11 is a partially enlarged view of the vicinity of a foam layer in Fig. 10.
Fig. 12 is a schematic cross-sectional view showing a configuration of a power storage cell according to a second embodiment.
Fig. 13 is a partially enlarged cross-sectional view showing configurations of a first electrode and a first tab according to the second embodiment.
Fig. 14 is a schematic plan view showing the first tab and an electrode body according to the second embodiment.
Fig. 15 shows the first electrode according to the second embodiment in an unwound state.
Fig. 16 is a cross-sectional view showing a first modification of the first embodiment.
Fig. 17 is a cross-sectional view showing a first modification of the second embodiment.
Fig. 18 is a cross-sectional view showing a second modification of the first embodiment.
Fig. 19 is a cross-sectional view showing a second modification of the second embodiment.
Fig. 20 is a cross-sectional view showing a third modification of the second embodiment.
Fig. 21 is a cross-sectional view showing a fourth modification of the second embodiment.
Fig. 22 is a cross-sectional view showing a third modification of the first embodiment.

### DESCRIPTION OF THE PREFERRED EMBODIMENTS

Embodiments of the present disclosure will be described with reference to the drawings. In the drawings referenced below, the same or corresponding members are designated by the same numerals.

### [First Embodiment]

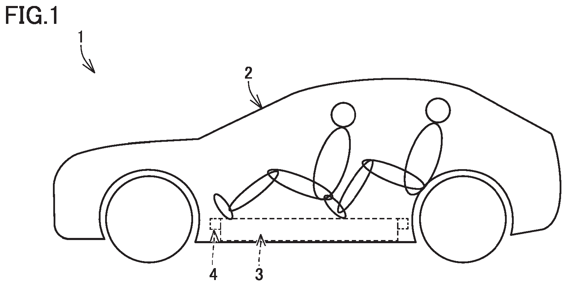

Fig. 1 schematically shows a vehicle including a power storage device in a first embodiment of the present disclosure. As shown in Fig. 1, a vehicle 1 includes a vehicle body 2 and a power storage device 3. Examples of vehicle 1 include a hybrid electric vehicle, a plug-in hybrid electric vehicle, and a battery electric vehicle. Power storage device 3 may be provided in an electrical device (e.g., a stationary power storage device) other than an electrically powered vehicle. As used herein, an X direction, a Y direction, and a Z direction are directions orthogonal to one another. For example, the X direction and the Y direction may be the front-rear direction and the right-left direction, respectively, when power storage device 3 is mounted on an electrically powered vehicle. The Z direction may be the up-down direction.

Vehicle body 2 includes a frame member 4. Frame member 4 is disposed at the bottom of vehicle body 2. Frame member 4 is formed in a substantially quadrangular tubular shape that surrounds power storage device 3. Power storage device 3 is attached to frame member 4.

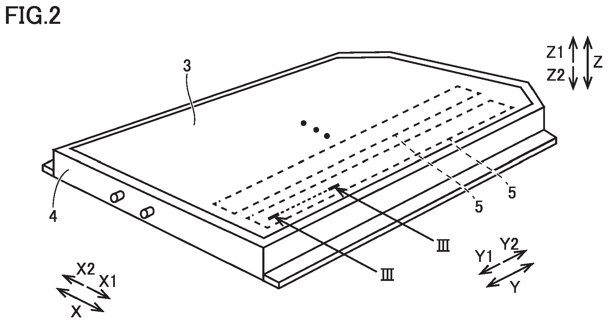

Fig. 2 is a perspective view schematically showing power storage device 3 and frame member 4. As shown in Fig. 2, power storage device 3 includes a plurality of power storage stacks 5.

Each power storage stack 5 is formed in a rectangular parallelepiped shape elongated in the Y direction. The plurality of power storage stacks 5 are disposed side by side along the X direction.

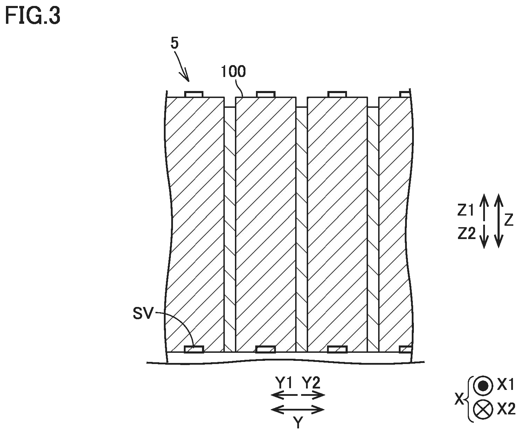

Fig. 3 is a cross-sectional view as seen in the direction of arrows III-III in Fig. 2 (a cross-sectional view of power storage stack 5). Each power storage stack 5 includes a plurality of power storage cells 100 arranged in the Y direction. A pressure release valve SV is formed at the bottom of each power storage cell 100. Pressure release valve SV is one example of "exhaust valve" of the present disclosure.

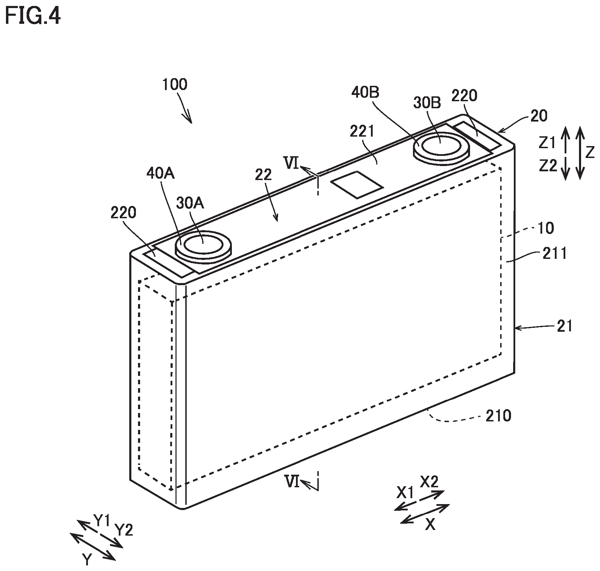

Fig. 4 is a perspective view showing power storage cell 100 according to the first embodiment. As shown in Fig. 4, power storage cell 100 is a so-called prismatic battery. Power storage cell 100 is a secondary battery configured to be chargeable and dischargeable. Power storage cell 100 may be a secondary battery such as a lithium-ion battery or a nickel-metal hydride battery. Power storage cell 100 may be used, for example, as a cell included in a power storage module mounted on an electrically powered vehicle.

Power storage cell 100 includes an electrode body 10, a case 20, a first external terminal 30A, a second external terminal 30B, a first terminal support portion 40A, and a second terminal support portion 40B. Note that electrode body 10 is schematically shown in Fig. 4. Electrode body 10 is one example of "wound electrode body" of the present disclosure.

Case 20 is electrically conductive. An electrically conductive portion of case 20 is made of metal such as aluminum. Case 20 contains electrode body 10. Case 20 also contains an electrolyte solution (not shown).

Case 20 includes a case body 21 and a lid 22. Case body 21 includes a bottom wall 210 and a peripheral wall 211 extending upward from bottom wall 210. Pressure release valve SV (Fig. 3) is formed on bottom wall 210. Bottom wall 210 is one example of "wall portion" of the present disclosure.

Lid 22 includes a lid body 220 and an insulating cover 221. Lid body 220 is joined to peripheral wall 211 by welding or the like so as to close an opening in peripheral wall 211.

First external terminal 30A and second external terminal 30B are provided so as to be exposed to the outside in power storage cell 100. In the first embodiment, first external terminal 30A is the positive terminal and second external terminal 30B is the negative terminal. First external terminal 30A and second external terminal 30B are arranged in the X direction.

First terminal support portion 40A is engaged with lid body 220. First terminal support portion 40A supports first external terminal 30A from the outer peripheral side of first external terminal 30A. Second terminal support portion 40B is engaged with lid body 220. Second terminal support portion 40B supports second external terminal 30B from the outer peripheral side of second external terminal 30B.

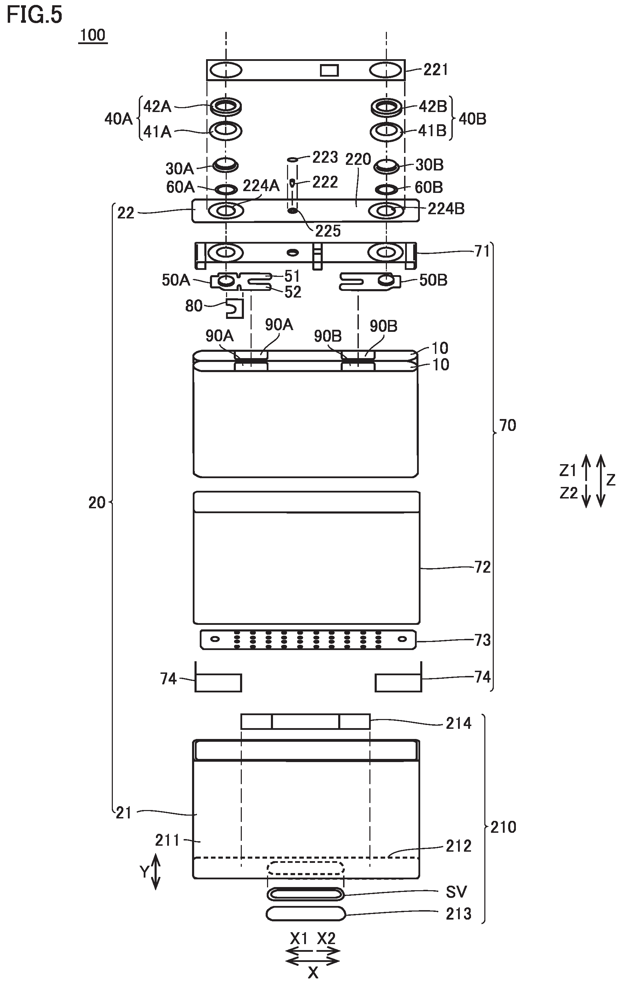

Fig. 5 is an exploded perspective view of power storage cell 100 according to the first embodiment. Power storage cell 100 further includes a first coupling member 50A, a second coupling member 50B, a first seal ring 60A, a second seal ring 60B, an insulating member 70, and a fuse protective portion 80. Each of first coupling member 50A and second coupling member 50B is one example of "current collector plate" of the present disclosure.

Bottom wall 210 includes a bottom body 212, an outer protective film 213, and an inner protective film 214. Peripheral wall 211 extends upward from bottom body 212. Pressure release valve SV is provided on bottom body 212. Outer protective film 213 covers pressure release valve SV from the outside. Inner protective film 214 covers pressure release valve SV from the inside. Bottom body 212 and pressure release valve SV are made of metal such as aluminum.

An opening is formed at the top of peripheral wall 211. Peripheral wall 211 has a substantially rectangular outline when viewed from an opening direction of the opening. The opening and bottom wall 210 are arranged in the Z direction. The Z direction may be the height direction or the up-down direction of power storage cell 100. Peripheral wall 211 is made of metal such as aluminum.

Lid 22 further includes a sealing plug 222 and a plug cover 223. Lid body 220 is provided with a first coupling hole 224A, a second coupling hole 224B, and an injection hole 225. Injection hole 225 is a through hole through which to inject the electrolyte solution into case body 21 in a manufacturing process of power storage cell 100.

Sealing plug 222 seals injection hole 225. Plug cover 223 covers injection hole 225 and sealing plug 222. Insulating cover 221 covers injection hole 225, sealing plug 222, and plug cover 223.

First coupling member 50A and second coupling member 50B are electrically conductive. First coupling member 50A and second coupling member 50B are at least partially disposed in case 20. Each of first coupling member 50A and second coupling member 50B is disposed at a position facing electrode body 10 in the Z direction.

First external terminal 30A or first coupling member 50A is inserted into first coupling hole 224A. First external terminal 30A and first coupling member 50A are joined to each other. First coupling member 50A is joined to electrode body 10. First external terminal 30A is thus electrically connected to electrode body 10.

Second external terminal 30B or second coupling member 50B is inserted into second coupling hole 224B. Second external terminal 30B and second coupling member 50B are joined to each other. Second coupling member 50B is joined to electrode body 10. Second external terminal 30B is thus electrically connected to electrode body 10.

First seal ring 60A is provided along first coupling hole 224A. First seal ring 60A is provided in a gap between lid body 220 and first external terminal 30A, and seals this gap. Second seal ring 60B is provided along second coupling hole 224B. Second seal ring 60B is provided in a gap between lid body 220 and second external terminal 30B, and seals this gap. First seal ring 60A and second seal ring 60B are electrically insulating.

First terminal support portion 40A includes a first engagement ring 41A and a first cover ring 42A. First engagement ring 41A extends annularly around first coupling hole 224A, and is directly engaged with lid body 220. First cover ring 42A covers first engagement ring 41A. First engagement ring 41A supports first external terminal 30A with first cover ring 42A interposed therebetween. First cover ring 42A is formed of an electrically insulating or relatively weakly electrically conductive resin member.

Second terminal support portion 40B includes a second engagement ring 41B and a second cover ring 42B. Second engagement ring 41B extends annularly around second coupling hole 224B, and is directly engaged with lid body 220. Second cover ring 42B covers second engagement ring 41B. Second engagement ring 41B supports second external terminal 30B with second cover ring 42B interposed therebetween. Second cover ring 42B is formed of an electrically insulating resin member.

Insulating member 70 is electrically insulating. Insulating member 70 is disposed between electrode body 10 and case 20. Insulating member 70 provides electrical insulation between electrode body 10 and case 20. Insulating member 70 includes an insulating bracket 71, a peripheral surface insulating portion 72, a bottom surface insulating portion 73, and an adhesive tape 74.

Insulating bracket 71 is disposed between electrode body 10 and lid body 220. Insulating bracket 71 has relatively high rigidity, and is in contact with both electrode body 10 and lid body 220. Electrode body 10 is thus fixed to case 20 in the Z direction.

Peripheral surface insulating portion 72 is disposed between electrode body 10 and peripheral wall 211. Electrode body 10 is formed of a film-like member.

Bottom surface insulating portion 73 is disposed between electrode body 10 and bottom wall 210. Bottom surface insulating portion 73 is formed of a film-like member. Bottom surface insulating portion 73 is fixed (bonded) to case 20 (bottom wall 210) with adhesive tape 74.

As shown in Fig. 5, power storage cell 100 according to the first embodiment includes a plurality of electrode bodies 10. Power storage cell 100 of the first embodiment includes two electrode bodies 10. These electrode bodies 10 are arranged in the Y direction. Peripheral surface insulating portion 72 may collectively cover the plurality of electrode bodies 10 so as to fix these electrode bodies 10 to each other.

Each of the plurality of electrode bodies 10 is provided with at least one first tab 90A and at least one second tab 90B. In the first embodiment, each of the plurality of electrode bodies 10 is provided with a plurality of first tabs 90A and a plurality of second tabs 90B. Each first tab 90A electrically connects a first electrode 10A which will be described later to first coupling member 50A. Each second tab 90B electrically connects a second electrode 10B which will be described later to second coupling member 50B. Each of first tab 90A and second tab 90B is one example of "electrode tab" of the present disclosure.

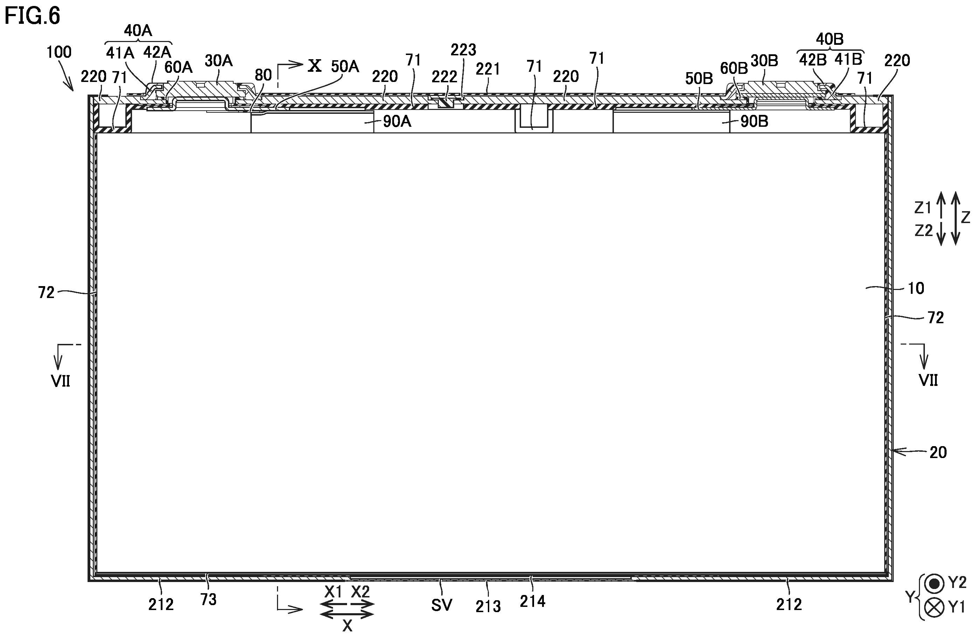

Fig. 6 is a cross-sectional view as seen in the direction of arrows VI-VI in Fig. 4. As shown in Fig. 6, the plurality of first tabs 90A are disposed side by side in the Y direction. The plurality of first tabs 90A are joined to one another by, for example, ultrasonic welding. The plurality of first tabs 90A are jointed to first coupling member 50A by, for example, ultrasonic welding. The plurality of second tabs 90B are disposed side by side in the Y direction. The plurality of second tabs 90B are joined to one another by, for example, ultrasonic welding. The plurality of second tabs 90B are jointed to second coupling member 50B by, for example, ultrasonic welding.

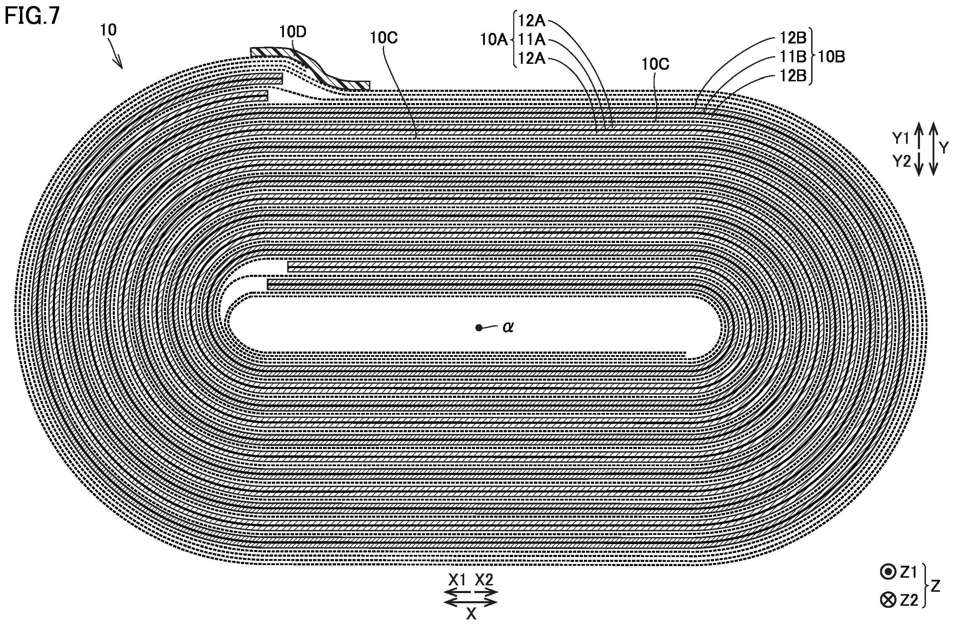

Fig. 7 is a cross-sectional view of the electrode body in Fig. 6 as seen in the direction of arrows VII-VII. Electrode body 10 includes first electrode 10A, second electrode 10B, a separator 10C, and a tape member 10D. In electrode body 10, first electrode 10A, second electrode 10B and separator 10C are wound about a winding axis α. As described above, electrode body 10 is a so-called wound electrode body in the first embodiment. However, electrode body 10 may be a stacked electrode body in which first electrode 10A, second electrode 10B and separator 10C are stacked in one direction (e.g., in the Y direction). Each of first electrode 10A and second electrode 10B is one example of "electrode sheet" of the present disclosure.

First electrode 10A and second electrode 10B each have a sheet-like outline. Electrode body 10 is constituted of a group of polar plates in which first electrode 10A and second electrode 10B are wound with one or more separators 10C interposed therebetween.

In the first embodiment, first electrode 10A is the positive electrode and second electrode 10B is the negative electrode. However, first electrode 10A may be the negative electrode and second electrode 10B may be the positive electrode.

Separator 10C is provided between first electrode 10A and second electrode 10B. Separator 10C separates first electrode 10A from second electrode 10B while allowing movement of ions between first electrode 10A and second electrode 10B. The ions are, for example, lithium ions. Separator 10C is electrically insulating.

Of first electrode 10A, second electrode 10B, and separator 10C, separator 10C is located on the innermost side about winding axis α. Of first electrode 10A, second electrode 10B, and separator 10C, separator 10C is located on the outermost side about winding axis α. The outer peripheral edge of separator 10C in the winding direction is fixed with tape member 10D disposed on the outer peripheral surface of separator 10C.

First electrode 10A includes a first current collector 11A and a first active material layer 12A. Second electrode 10B includes a second current collector 11B and a second active material layer 12B.

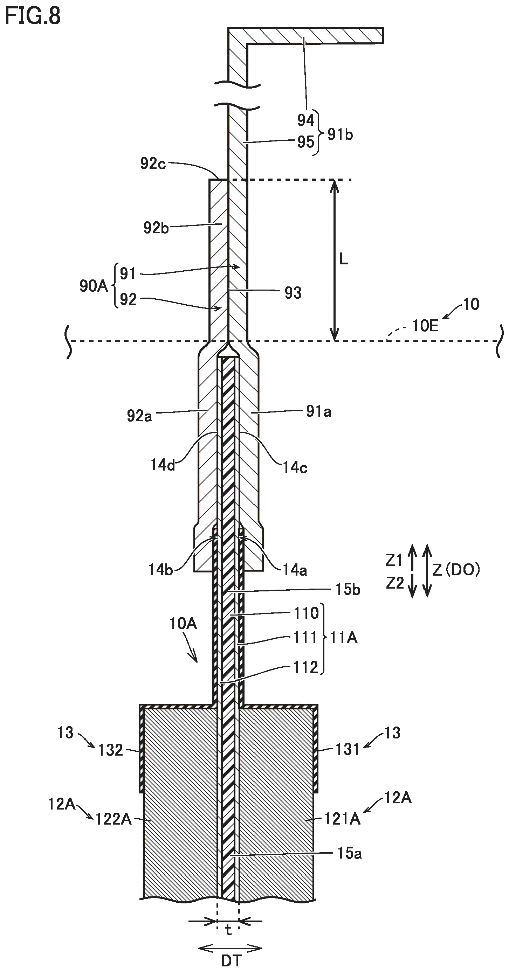

Fig. 8 is a cross-sectional view of first electrode 10A. First current collector 11A includes a support portion 110, a first conductive layer 111, and a second conductive layer 112. First electrode 10A further includes a protective portion 13. First current collector 11A and first active material layer 12A are examples of "current collector" and "electrode active material layer" of the present disclosure, respectively.

Support portion 110 is made of an electrically insulating resin composite. For example, support portion 110 is made of a resin composite including polyester-based resin. The polyester-based resin is preferably polyethylene terephthalate, for example. Accordingly, the rigidity of first current collector 11A can be increased while the electrically insulating property of support portion 110 is maintained. Support portion 110 can in turn be made relatively thin. An orthogonal direction DO orthogonal to a thickness direction DT of support portion 110 is substantially parallel to the Z direction.

First conductive layer 111 is in contact with support portion 110 on one side in thickness direction DT. In the first embodiment, first conductive layer 111 is located on the winding axis α side when viewed from support portion 110. First conductive layer 111 is also provided over the entire surfaces of a coated portion 15a and an uncoated portion 15b, which will be described later, on one side in thickness direction DT.

Second conductive layer 112 is in contact with support portion 110 on the other side in thickness direction DT. In the first embodiment, second conductive layer 112 is located opposite to winding axis α when viewed from support portion 110. Second conductive layer 112 is also provided over the entire surfaces of coated portion 15a and uncoated portion 15b, which will be described later, on the other side in thickness direction DT.

Each of first conductive layer 111 and second conductive layer 112 is formed of a metal layer. In the first embodiment, each of first conductive layer 111 and second conductive layer 112 is made of metal including aluminum. Accordingly, first current collector 11A can be suitably used as a positive current collector. First current collector 11A may be a negative current collector, and first conductive layer 111 and second conductive layer 112 may be made of metal including copper.

Each of the plurality of first tabs 90A is joined to first conductive layer 111 and second conductive layer 112 by, for example, ultrasonic welding. Each of the plurality of first tabs 90A extends toward Z1 from support portion 110.

First current collector 11A has a surface 14a and a surface 14b arranged in thickness direction DT. Surface 14a is a surface of first conductive layer 111 opposite to support portion 110. Surface 14b is a surface of second conductive layer 112 opposite to support portion 110. Surface 14a and surface 14b are examples of "first surface" and "second surface" of the present disclosure, respectively.

First current collector 11A has coated portion 15a coated with first active material layer 12A, and uncoated portion 15b not coated with first active material layer 12A. Uncoated portion 15b at least partially exposes first current collector 11A. Uncoated portion 15b is provided on the Z1 side (the first coupling member 50A (Fig. 5) side) relative to coated portion 15a. First active material layer 12A covers each of surface 14a and surface 14b of first current collector 11A at coated portion 15a.

Each of the plurality of first tabs 90A includes a first foil portion 91 and a second foil portion 92. First foil portion 91 is located opposite to support portion 110 when viewed from first conductive layer 111. First foil portion 91 is joined to first conductive layer 111. First foil portion 91 is joined to first coupling member 50A (Fig. 5). Second foil portion 92 is located opposite to support portion 110 when viewed from second conductive layer 112. Second foil portion 92 is joined to second conductive layer 112. Second foil portion 92 is joined to second coupling member 50B (Fig. 5). First foil portion 91 and second foil portion 92 are examples of "first electrode foil" and "second electrode foil" of the present disclosure, respectively.

First foil portion 91 is provided on a portion 14c of surface 14a that corresponds to uncoated portion 15b. First foil portion 91 is joined to portion 14c. Portion 14c is one example of "first uncoated portion" of the present disclosure.

Second foil portion 92 is provided on a portion 14d of surface 14b that corresponds to uncoated portion 15b. Second foil portion 92 is joined to portion 14d. Portion 14d is provided in a region that overlaps portion 14c in the Z direction. Portion 14d is one example of "second uncoated portion" of the present disclosure.

First foil portion 91 includes a lower portion 91a and an upper portion 91b. Lower portion 91a is disposed on first electrode 10A. Specifically, lower portion 91a is joined to portion 14c. Upper portion 91b protrudes to the Z1 side (the first coupling member 50A (Fig. 5) side) from lower portion 91a (portion 14c). Upper portion 91b and lower portion 91a are examples of "first protruding portion" and "seat side portion" of the present disclosure, respectively.

Second foil portion 92 includes a lower portion 92a and an upper portion 92b. Lower portion 92a is disposed on first electrode 10A. Specifically, lower portion 92a is joined to portion 14d. Upper portion 92b protrudes to the Z1 side (the first coupling member 50A (Fig. 5) side) from lower portion 92a (portion 14d). Upper portion 92b is one example of "second protruding portion" of the present disclosure.

Upper portion 91b is jointed to upper portion 92b. Specifically, upper portion 91b and upper portion 92b are joined to each other by ultrasonic welding, for example, at a joint portion 93 on the Z1 side relative to first current collector 11A. Joint portion 93 extends for a length L in the Z direction. Length L is greater than, for example, a thickness t of first current collector 11A in thickness direction DT.

First foil portion 91 (upper portion 91b) extends further toward Z1 than an upper end portion 92c (Z1-side end portion) of second foil portion 92 (upper portion 92b). Joint portion 93 is a portion where upper portion 92b and a Z2-side root portion of upper portion 91b are joined to each other. Joint portion 93 extends, for example, toward Z1 from an upper end portion 10E of electrode body 10. Upper end portion 10E of electrode body 10 is the upper end portion of separator 10C (Fig. 7). The lower end portion of joint portion 93 may be located, for example, on the Z1 side or on the Z2 side relative to upper end portion 10E.

As described above, in the first embodiment, the length of first foil portion 91 in orthogonal direction DO (Z direction) orthogonal to thickness direction DT is greater than the length of second foil portion 92 in orthogonal direction DO. First foil portion 91 is joined to first coupling member 50A, and second foil portion 92 is not joined to first coupling member 50A. However, the configuration of first tab 90A is not limited as such. The length of second foil portion 92 in orthogonal direction DO may be greater than the length of first foil portion 91 in orthogonal direction DO. Second foil portion 92 may be joined to first coupling member 50A, and first foil portion 91 may not be joined to first coupling member 50A.

First active material layer 12A includes a first inner active material layer 121A and a first outer active material layer 122A. First inner active material layer 121A is stacked on first conductive layer 111. First outer active material layer 122A is stacked on second conductive layer 112.

The upper edge of first active material layer 12A is spaced from each of the plurality of first tabs 90A. Specifically, the upper edge of first inner active material layer 121A is spaced from first foil portion 91 of each of the plurality of first tabs 90A. The upper edge of first outer active material layer 122A is spaced from second foil portion 92 of each of the plurality of first tabs 90A.

Separator 10C is stacked on first active material layer 12A in a radial direction about winding axis α (Fig. 7). Separator 10C is stacked on first inner active material layer 121A in the radial direction. Separator 10C is also stacked on first outer active material layer 122A in the radial direction.

Protective portion 13 is electrically insulating, and is made of, for example, ceramic. Protective portion 13 covers the top of first active material layer 12A. Protective portion 13 further covers first current collector 11A between first tab 90A and first active material layer 12A.

Protective portion 13 includes an inner protective portion 131 and an outer protective portion 132. Inner protective portion 131 covers the top of first inner active material layer 121A. Inner protective portion 131 covers first conductive layer 111 between first foil portion 91 and first inner active material layer 121A. Outer protective portion 132 covers the top of first outer active material layer 122A. Outer protective portion 132 covers second conductive layer 112 between second foil portion 92 and first outer active material layer 122A.

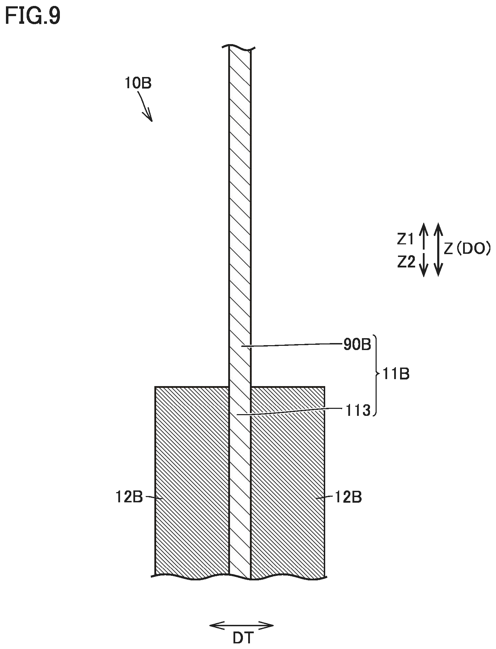

Fig. 9 is a cross-sectional view of second electrode 10B. Second electrode 10B is stacked on first active material layer 12A (Figs. 7 and 8) with separator 10C (Fig. 7) interposed therebetween in the radial direction. More specifically, second electrode 10B is stacked on first inner active material layer 121A (Fig. 8) with separator 10C interposed therebetween, and is also stacked on first outer active material layer 122A (Fig. 8) with separator 10C interposed therebetween, in the radial direction.

Second electrode 10B includes second current collector 11B and second active material layer 12B. Second current collector 11B includes a conductive support portion 113 and the plurality of second tabs 90B. Conductive support portion 113 extends along orthogonal direction DO (Z direction). The plurality of second tabs 90B extend from the upper end of conductive support portion 113. The plurality of second tabs 90B are joined to one another and to second coupling member 50B by ultrasonic welding (Figs. 5 and 6).

The plurality of second tabs 90B and conductive support portion 113 are formed of an integral member, for example, a metal foil. In the first embodiment, the plurality of second tabs 90B and conductive support portion 113 are made of, for example, metal including copper. Accordingly, second current collector 11B can be suitably used as a negative current collector. In the case where first current collector 11A is a negative current collector, the plurality of second tabs 90B and conductive support portion 113 may be made of metal including aluminum.

Second active material layer 12B is stacked on both surfaces of conductive support portion 113 of second current collector 11B. In the first embodiment, since second electrode 10B is the negative electrode, the edge of second active material layer 12B in the Z direction is located ahead of the edge of first active material layer 12A.

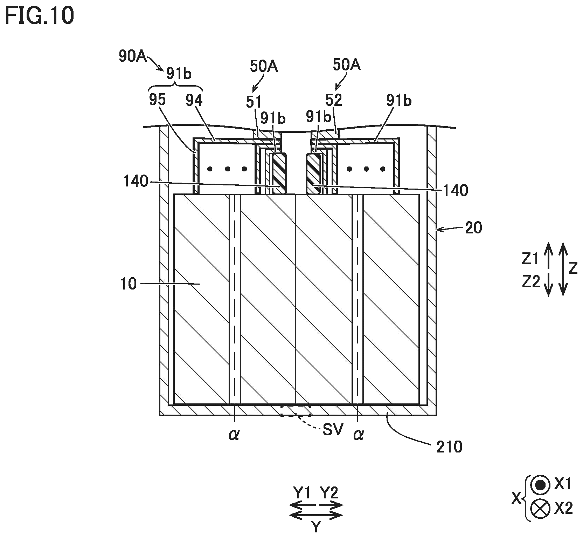

Fig. 10 is a schematic cross-sectional view of the electrode body in Fig. 6 as seen in the direction of arrows X-X. The plurality of first tabs 90A are arranged in the Y direction. Fig. 10 shows a reduced number of first tabs 90A provided on each electrode body 10 for simplicity. Fig. 10 does not show upper portion 92b for simplicity. Although a plurality of portions 94 are schematically shown as overlapping each other in the Z direction in the example of Figs. 10 and the like, portions 94 may be displaced from each other, for example, so that each portion 94 is in direct contact with first coupling member 50A. The Y direction is one example of "arrangement direction" of the present disclosure.

Upper portion 91b of each first tab 90A includes portion 94 disposed on first coupling member 50A. Each portion 94 extends along the Y direction, and is at least partially disposed on first coupling member 50A. That portion 94 is disposed on first coupling member 50A includes not only portion 94 being directly disposed on (in contact with) first coupling member 50A, but also portion 94 being disposed with another portion 94 sandwiched between portion 94 and first coupling member 50A, for example. Portion 94 is one example of "current collector plate side portion" of the present disclosure.

Upper portion 91b of each first tab 90A includes a connecting portion 95 that connects lower portion 91a (Fig. 8) to portion 94. Each connecting portion 95 extends along the Z direction. Each of the plurality of portions 94 in each electrode body 10 extends to one side in the Y direction from the upper end portion of connecting portion 95. Specifically, each of the plurality of portions 94 in Y1-side electrode body 10 extends toward Y2 from the upper end portion of connecting portion 95. Each of the plurality of portions 94 in Y2-side electrode body 10 extends toward Y1 from the upper end portion of connecting portion 95. Although adjacent connecting portions 95 are shown as being spaced from each other in Fig. 10 for clarity, adjacent connecting portions 95 may be in contact with each other. Although connecting portion 95 is schematically shown as extending in the Z direction in Fig. 10, connecting portion 95 may be curved (bent), for example.

The plurality of first tabs 90A (upper portions 91b) protrude toward Z1 from each electrode body 10. First coupling member 50A has a one side connection portion 51 connected to first tab 90A of Y1-side electrode body 10, and an other side connection portion 52 connected to first tab 90A of Y2-side electrode body 10. One side connection portion 51 and other side connection portion 52 are disposed at a distance from each other in the Y direction.

In a conventional power storage cell, an external force such as a tensile force or a torsional force may be applied to an electrode tab when the power storage cell vibrates, resulting in damage to the electrode tab.

In the first embodiment, therefore, power storage cell 100 includes a foam layer 140. Foam layer 140 is in contact with first tab 90A, to thereby support first tab 90A. In other words, foam layer 140 regulates the movement (vibration) of the first tab.

In the example shown in Fig. 10, foam layer 140 is disposed at a position adjacent to first tab 90A provided at the end portion in the Y direction of the plurality of first tabs 90A arranged in the Y direction in each electrode body 10. Specifically, foam layer 140 is adjacent to first tab 90A disposed closest to the Y2 side of the plurality of first tabs 90A of Y1-side electrode body 10. Foam layer 140 is adjacent to first tab 90A disposed closest to the Y1 side of the plurality of first tabs 90A of Y2-side electrode body 10. Although foam layer 140 adjacent to first tab 90A of Y1-side electrode body 10 and foam layer 140 adjacent to first tab 90A of Y2-side electrode body 10 are separately provided in the example shown in Fig. 10, a single foam layer 140 may extend in the Y direction so as to be adjacent to two first tabs 90A described above.

Since the configurations (arrangements) of foam layers 140 in two electrode bodies 10 are the same, only foam layer 140 disposed on Y1-side electrode body 10 is described below.

As shown in Fig. 10, pressure release valve SV is disposed on a side (Z2 side) opposite to foam layer 140 with respect to electrode body 10. Foam layer 140 may be formed at a position that overlaps pressure release valve SV in the Z direction.

Accordingly, when debris is produced due to generation of smoke and the like in electrode body 10, for example, foam layer 140 provided opposite to pressure release valve SV further foams (due to heat of smoke and the like), which allows the debris to be pushed through pressure release valve SV and discharged out of case 20.

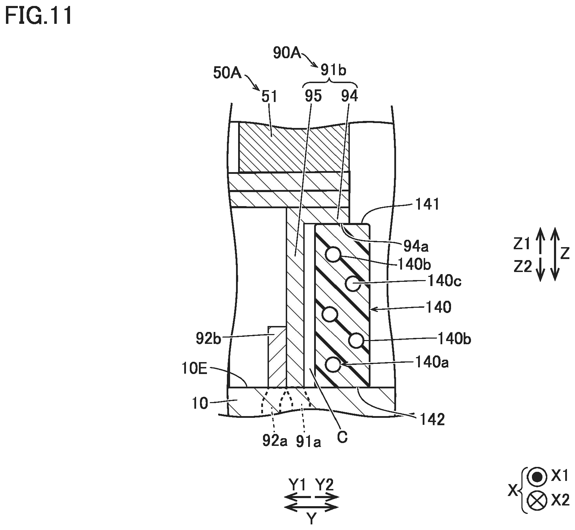

Fig. 11 is a partially enlarged view of the vicinity of foam layer 140 in Fig. 10. Although Fig. 11 shows only first tab 90A adjacent to foam layer 140 as being in contact with foam layer 140, portion 94 of another first tab 90A may be in contact with foam layer 140. In the following, a relation between foam layer 140 and first tab 90A adjacent to foam layer 140 will be described with reference to Fig. 11.

As shown in Fig. 11, foam layer 140 is in contact with portion 94. Specifically, an upper end surface 141 of foam layer 140 is in surface contact with a lower surface 94a of portion 94. Although not shown, each of upper end surface 141 and lower surface 94a extends along the X direction. Portion 94 disposed on first coupling member 50A is pressed by foam layer 140 from a side (Z2 side) opposite to first coupling member 50A.

Accordingly, the movement of portion 94 is regulated by foam layer 140, so that displacement (disjoining) of portion 94 from first coupling member 50A can be suppressed. As a result, electrical disconnection between electrode body 10 and first coupling member 50A can be suppressed.

Foam layer 140 is spaced from connecting portion 95. In other words, a gap C is formed between foam layer 140 and connecting portion 95.

Accordingly, pressing of connecting portion 95 by foam layer 140 can be suppressed. As a result, damage to connecting portion 95 or removal of the joint of joint portion 93 (Fig. 8) formed at a position corresponding to connecting portion 95 due to a pressing force from foam layer 140 can be suppressed.

A lower surface 142 of foam layer 140 is in contact with electrode body 10. Therefore, foam layer 140 presses electrode body 10 to the Z2 side. Accordingly, electrode body 10 can be stably fixed to a support member (e.g., bottom wall 210 of case 20) supporting electrode body 10 from the Z2 side. Although lower surface 142 of foam layer 140 is in contact with upper end portion 10E of electrode body 10, foam layer 140 may partially extend into electrode body 10 (to a Z2-side portion relative to upper end portion 10E).

Foam layer 140 includes thermally expandable microcapsules 140a. The density of microcapsules 140a is uniform in foam layer 140. The size (the amount of expansion) of foam layer 140 can be readily adjusted by adjustment of the density of microcapsules 140a in foam layer 140. Microcapsule 140a is one example of "foam body" of the present disclosure.

Foam layer 140 is insulating. Accordingly, even when foam layer 140 contacts second electrode 10B, electrical connection between first electrode 10A and second electrode 10B can be suppressed.

For example, foam layer 140 may be formed of an insulating tape containing microcapsules 140a. A heating test of power storage cell 100 may be conducted with the insulating tape attached to lower surface 94a of portion 94, for example, to thereby thermally expand microcapsules 140a and expand the insulating tape. Foam layer 140 may thus be formed.

Microcapsule 140a includes a fire extinguishing gas 140c. Specifically, microcapsule 140a has a capsule wall 140b. Fire extinguishing gas 140c fills the space inside capsule wall 140b. When the temperature of microcapsule 140a reaches the maximum foaming temperature, fire extinguishing gas 140c inside is released through capsule wall 140b. Fire extinguishing gas 140c may be, for example, carbon dioxide.

Accordingly, fire extinguishing gas 140c released from microcapsules 140a can prevent (suppress), for example, the generation of smoke from power storage cell 100.

As described above, in the first embodiment, foam layer 140 is in contact with first tab 90A, to thereby support first tab 90A. Accordingly, the movement (positional displacement) of first tab 90A can be regulated by foam layer 140. As a result, the application of an external force such as a tensile force or a torsional force to first tab 90A can be suppressed when power storage cell 100 vibrates. Accordingly, damage to first tab 90A can be suppressed.

In addition, since the movement (positional displacement) of first tab 90A is suppressed, disjoining between first tab 90A and first coupling member 50A, disjoining between first foil portion 91 and second foil portion 92, disjoining between first tab 90A and first electrode 10A and the like can be suppressed.

### [Second Embodiment]

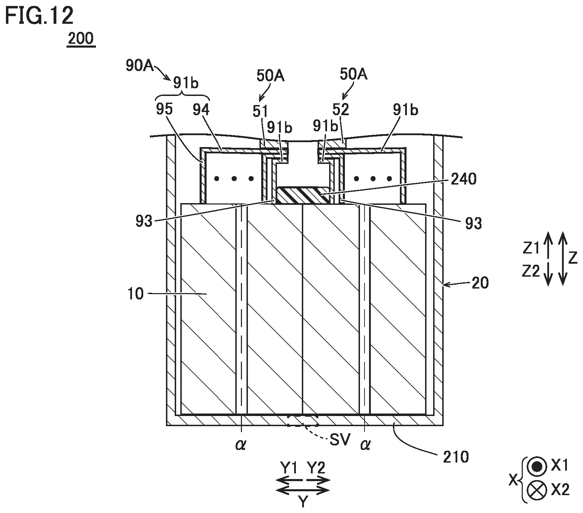

A power storage cell 200 according to a second embodiment of the present disclosure will be described with reference to Figs. 12 to 15. Unlike the above first embodiment in which portion 94 is in contact with foam layer 140, connecting portion 95 is in contact with a foam layer in power storage cell 200. The same components as those of the above first embodiment are designated by the same reference characters and the description will not be repeated.

As shown in Fig. 12, power storage cell 200 includes a foam layer 240. Fig. 12 does not show microcapsules 140a and upper portion 92b for simplicity.

Foam layer 240 extends over Y1-side electrode body 10 and Y2-side electrode body 10. As in the above first embodiment, a foam layer disposed on Y1-side electrode body 10 and a foam layer disposed on Y2-side electrode body 10 may be separately provided in the second embodiment as well.

Foam layer 240 is disposed between first tab 90A that is closest to the Y2 side of the plurality of first tabs 90A of Y1-side electrode body 10 and first tab 90A that is closest to the Y1 side of the plurality of first tabs 90A of Y2-side electrode body 10. Although the following describes a relation between foam layer 240 and first tab 90A of Y1-side electrode body 10, a relation between foam layer 240 and first tab 90A of Y2-side electrode body 10 is also the same.

In the second embodiment, foam layer 240 is in contact with connecting portion 95 of first tab 90A. Specifically, foam layer 240 is disposed at a position beside joint portion 93 between first foil portion 91 (connecting portion 95) and second foil portion 92 (not shown) in the Y direction. In the second embodiment, joint portion 93 is preferably provided at a position deviated (protruding) from electrode body 10 toward Z1.

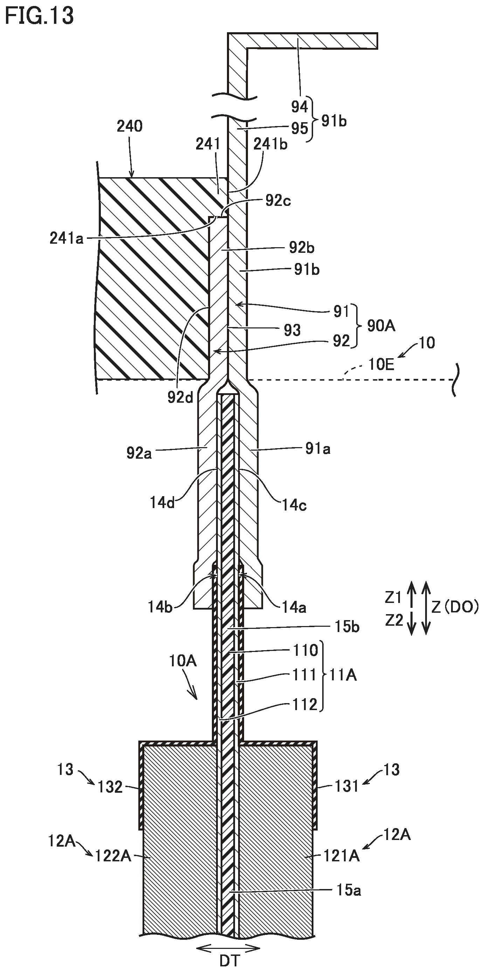

Fig. 13 is a partially enlarged cross-sectional view showing first electrode 10A, first tab 90A and foam layer 240. Foam layer 240 is in contact with upper end portion 10E of electrode body 10. Foam layer 240 may partially extend into electrode body 10 (to a Z2-side portion relative to upper end portion 10E).

In the second embodiment, foam layer 240 supports joint portion 93. Accordingly, disjoining between first foil portion 91 and second foil portion 92 at joint portion 93 can be suppressed.

Specifically, foam layer 240 is in contact with first tab 90A from the second foil portion 92 (upper portion 92b) side. Foam layer 240 is in surface contact with a surface 92d of upper portion 92b opposite to joint portion 93.

Foam layer 240 includes a portion 241 that covers upper portion 92b of second foil portion 92 from the Z1 side. A lower surface 241a of portion 241 is in surface contact with upper end portion 92c of upper portion 92b. A side surface 241b of portion 241 is in surface contact with first foil portion 91 (upper portion 91b). Foam layer 240 may not be provided with portion 241. For example, the upper end portion of foam layer 240 may be provided at the same position as upper end portion 92c of upper portion 92b in the Z direction, or may be provided on the Z2 side relative to upper end portion 92c.

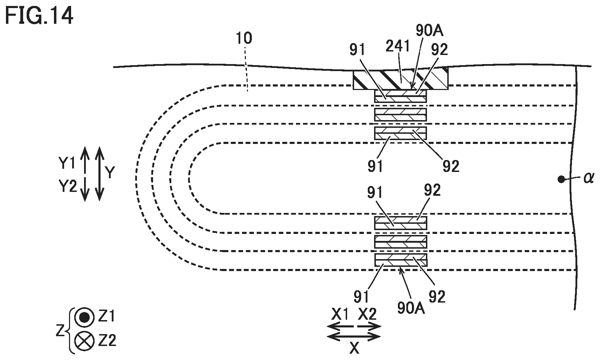

Fig. 14 is a schematic plan view showing the plurality of first tabs 90A in electrode body 10.

In the second embodiment, in each of the plurality of first tabs 90A, first foil portion 91 is disposed opposite to foam layer 240 with respect to second foil portion 92. That is, in each of the plurality of first tabs 90A, second foil portion 92 is disposed on the foam layer 240 side with respect to first foil portion 91.

Accordingly, even when a pressing force from foam layer 240 is applied to each first tab 90A, first foil portion 91 and second foil portion 92 have a uniform positional relation with respect to a direction in which the pressing force is applied. As a result, variations in the manner in which the pressing force is applied to joint portion 93 (Fig. 13) in each first tab 90A can be suppressed. As a result, the occurrence of any joint portion 93 that tends to be locally disjoined among the plurality of joint portions 93 can be suppressed.

Specifically, in each of the plurality of first tabs 90A on the Y1 side relative to winding axis α and the plurality of first tabs 90A on the Y2 side relative to winding axis α, first foil portion 91 is disposed opposite to foam layer 240 with respect to second foil portion 92.

Although not shown in Fig. 14, as in Y2-side electrode body 10, in each of the plurality of first tabs 90A, second foil portion 92 is disposed on the foam layer 240 side with respect to first foil portion 91 in Y1-side electrode body 10 as well.

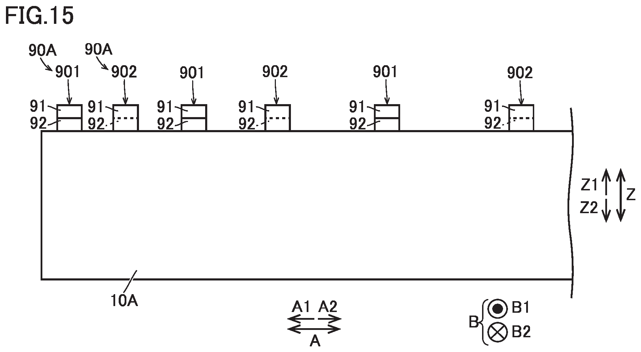

Fig. 15 shows first electrode 10A and the plurality of first tabs 90A in an unwound state. First electrode 10A has a strip shape extending in an A direction. An A1 side is the starting point side of the winding. An A2 side is the ending point side of the winding. The A direction is one example of "winding direction" of the present disclosure.

As shown in Fig. 15, the plurality of first tabs 90A are spaced from one another and disposed side by side in the A direction.

Here, a direction orthogonal to the A direction is defined as a B direction. First foil portion 91 and second foil portion 92 are disposed side by side (adjacent to each other) in the B direction. The B direction corresponds to the Y direction in a state where first electrode 10A has been wound. Therefore, the B direction corresponds to the "arrangement direction " of the present disclosure.

First tab 90A includes a tab 901 in which first foil portion 91 is disposed on the B2 side (back side in the plane of the drawing) relative to second foil portion 92, and a tab 902 in which first foil portion 91 is disposed on the B1 side (front side in the plane of the drawing) relative to second foil portion 92. That is, tab 902 has a reversed arrangement of first foil portion 91 and second foil portion 92 from tab 901. Second foil portion 92 indicated by a broken line in Fig. 15 means that second foil portion 92 is disposed closer to the back side than first foil portion 91. Tab 901 and tab 902 are examples of "first electrode tab" and "second electrode tab" of the present disclosure, respectively.

In the second embodiment, tab 901 and tab 902 are alternately disposed in the A direction. Each of the plurality of tabs 901 is arranged on one side in the Y direction (e.g., on the Y1 side) relative to winding axis α. Each of the plurality of tabs 902 is arranged on the other side in the Y direction (e.g., on the Y2 side) relative to winding axis α.

With this configuration, first foil portion 91 and second foil portion 92 in each of the plurality of first tabs 90A can readily have a uniform positional relation in the state where first electrode 10A has been wound.

Since the configuration is otherwise the same as that of the above first embodiment, the description will not be repeated.

### [Modifications]

Although the density of microcapsules 140a in foam layer 140 (240) is uniform in the examples described in the above first and second embodiments, the present disclosure is not limited as such. The density of microcapsules 140a in the foam layer may not be uniform.

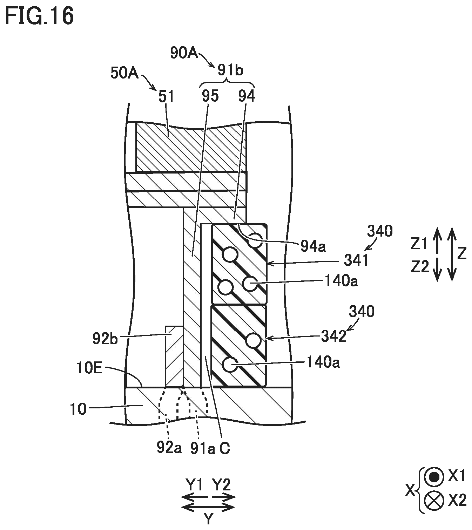

Fig. 16 shows a modification of the above first embodiment. A foam layer 340 includes a portion 341 and a portion 342. Portion 341 is provided closer to first tab 90A than portion 342. The term "close to first tab 90A" means close to a portion (portion 94 in Fig. 16) where first tab 90A is supported by foam layer 340. Portion 341 is stacked on portion 342 on the Z1 side of portion 342. Portion 341 is in contract with portion 94 of first tab 90A to thereby support portion 94. Portion 342 is in contact with electrode body 10. Portion 341 and portion 342 are examples of "other side portion" and "one side portion" of the present disclosure, respectively.

The density of microcapsules 140a in portion 341 is higher than the density of microcapsules 140a in portion 342. This allows the amount of expansion of portion 341 near first tab 90A (portion 94) to be larger than the amount of expansion of portion 342 when foam layer 340 foams. As a result, first tab 90A (portion 94) can be readily cut through expanded portion 341. Accordingly, the electrical connection between electrode body 10 and first coupling member 50A can be interrupted during thermal runaway of power storage cell 100 and the like. In addition, since the amount of expansion of portion 342 can be made relatively small, application of excessive pressure to electrode body 10 from portion 342 can be suppressed.

Portion 341 is provided separately from portion 342 in Fig. 16. The density of microcapsules 140a may be uniform in each of portion 341 and portion 342. In a foam layer having portion 341 and portion 342 integrally formed therein, the density of microcapsules 140a may increase with a decreasing distance from portion 94.

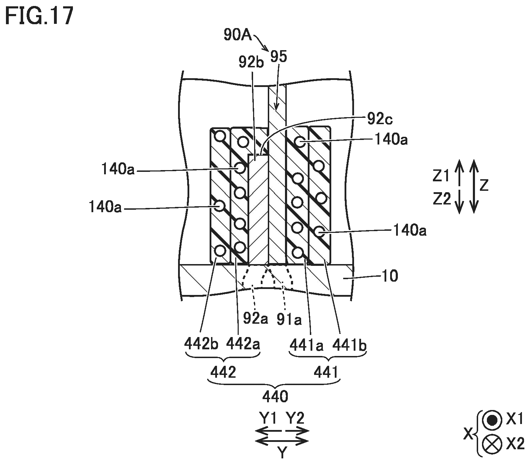

The modification of Fig. 16 may be applied to the above second embodiment. Specifically, as shown in Fig. 17, a foam layer 440 includes a foam layer 441 and a foam layer 442. Connecting portion 95 of first tab 90A is sandwiched between foam layer 441 and foam layer 442 in the Y direction. Foam layer 441 is in contact with connecting portion 95 from the Y2 side of first tab 90A (connecting portion 95). Foam layer 442 is in contact with connecting portion 95 from the Y1 side of connecting portion 95. Foam layer 440 may include only one of foam layer 441 and foam layer 442.

Foam layer 441 includes a portion 441a and a portion 441b. Portion 441a is provided closer to first tab 90A (connecting portion 95) than portion 441b. Portion 441a and portion 441b are adjacent to each other. Portion 441a and portion 441b are examples of "other side portion" and "one side portion" of the present disclosure, respectively.

Foam layer 442 includes a portion 442a and a portion 442b. Portion 442a is provided closer to first tab 90A (connecting portion 95) than portion 442b. Portion 442a and portion 442b are adjacent to each other. Upper end portion 92c of upper portion 92b is covered with part of portion 442a from the Z1 side. Portion 442a and portion 442b are examples of "other side portion" and "one side portion" of the present disclosure, respectively.

The density of microcapsules 140a in portion 441a is higher than the density of microcapsules 140a in portion 441b. The density of microcapsules 140a in portion 442a is higher than the density of microcapsules 140a in portion 442b. The density of microcapsules 140a may be uniform in each of portions 441a, 441b, 442a and 442b.

Portion 441a is provided separately from portion 441b, and portion 442a is provided separately from portion 442b. Portion 441a and portion 441b may be integrally formed, and portion 442a and portion 442b may be integrally formed. In such an integrally formed foam layer, the density of microcapsules 140a may increase with a decreasing distance from connecting portion 95.

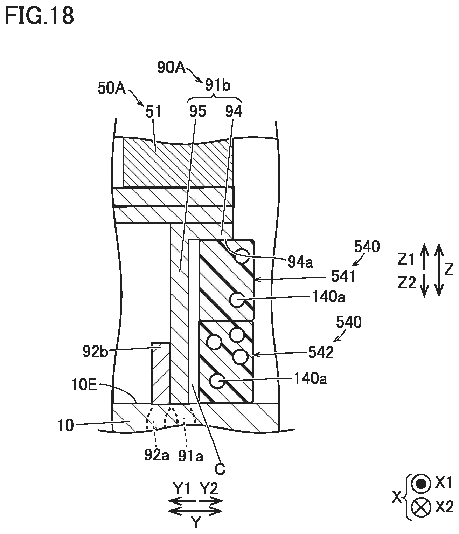

Fig. 18 shows modification of the above first embodiment. A foam layer 540 includes a portion 541 and a portion 542. Portion 541 is provided closer to first tab 90A than portion 542. The term "close to first tab 90A" means close to a portion (portion 94 in Fig. 18) where first tab 90A is supported by foam layer 540. Portion 541 is stacked on portion 542 on the Z1 side of portion 542. Portion 541 is in contact with portion 94 of first tab 90A to thereby support portion 94. Portion 542 is in contact with electrode body 10. Portion 541 and portion 542 are examples of "second direction side portion" and "first direction side portion" of the present disclosure, respectively.

The density of microcapsules 140a in portion 542 is higher than the density of microcapsules 140a in portion 541. This allows the amount of expansion of portion 541 near first tab 90A (portion 94) to be smaller than the amount of expansion of portion 542 when foam layer 540 foams. As a result, first tab 90A can be supported while the cutting of first tab 90A (portion 94) through expanded portion 541 is suppressed. In addition, since the amount of expansion of portion 542 can be made relatively large, electrode body 10 can be more stably fixed by the pressure from portion 542.

Portion 541 is provided separately from portion 542. The density of microcapsules 140a may be uniform in each of portion 541 and portion 542. In a foam layer having portion 541 and portion 542 integrally formed therein, the density of microcapsules 140a may decrease with a decreasing distance from portion 94.

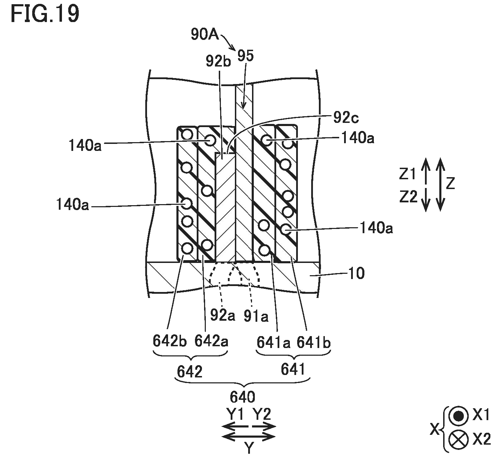

The modification of Fig. 18 may be applied to the above second embodiment. Specifically, as shown in Fig. 19, a foam layer 640 includes a foam layer 641 and a foam layer 642. Connecting portion 95 of first tab 90A is sandwiched between foam layer 641 and foam layer 642 in the Y direction. Foam layer 641 is in contact with connecting portion 95 from the Y2 side of first tab 90A (connecting portion 95). Foam layer 642 is in contact with connecting portion 95 from the Y1 side of connecting portion 95. Foam layer 640 may include only one of foam layer 641 and foam layer 642.

Foam layer 641 includes a portion 641a and a portion 641b. Portion 641a is provided closer to first tab 90A (connecting portion 95) than portion 641b. Portion 641a and portion 641b are adjacent to each other. Upper end portion 92c of upper portion 92b is covered with part of a portion 642a from the Z1 side. Portion 641a and portion 641b are examples of "second direction side portion" and "first direction side portion" of the present disclosure, respectively.

Foam layer 642 includes portion 642a and a portion 642b. Portion 642a is provided closer to first tab 90A (connecting portion 95) than portion 642b. Portion 642a and portion 642b are adjacent to each other. Portion 642a and portion 642b are examples of "second direction side portion" and "first direction side portion" of the present disclosure, respectively.

The density of microcapsules 140a in portion 641b is higher than the density of microcapsules 140a in portion 641a. The density of microcapsules 140a in portion 642b is higher than the density of microcapsules 140a in portion 642a. The density of microcapsules 140a may be uniform in each of portions 641a, 641b, 642a and 642b.

Portion 641a is provided separately from portion 641b, and portion 642a is provided separately from portion 642b. Portion 641a and portion 641b may be integrally formed, and portion 642a and portion 642b may be integrally formed. In such an integrally formed foam layer, the density of microcapsules 140a may decrease with a decreasing distance from connecting portion 95.

Although the foam layer is provided only on one side in the Y direction with respect to first tab 90A in the example described in the above second embodiment, the present disclosure is not limited as such. The foam layers may be provided on both sides in the Y direction with respect to first tab 90A.

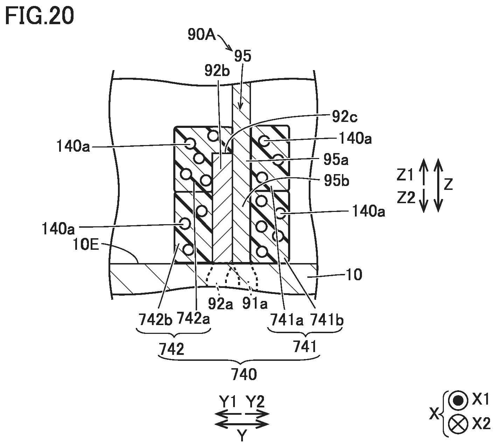

Fig 20 shows a modification of the above second embodiment. A foam layer 740 includes a foam layer 741 and a foam layer 742. Foam layer 741 is in contact with connecting portion 95 from the Y2 side of first tab 90A (connecting portion 95). Foam layer 742 is in contact with connecting portion 95 from the Y1 side of connecting portion 95. Connecting portion 95 is sandwiched between foam layer 741 and foam layer 742 in the Y direction. The positions of foam layer 741 and foam layer 742 may be reversed from that described above. Foam layer 741 and foam layer 742 are examples of "first foam layer" and "second foam layer" of the present disclosure, respectively.

As shown in Fig. 20, a direction in which each of foam layer 741 and foam layer 742 extends along first tab 90A (connecting portion 95) is defined as the Z direction in the description below. In this case, the Z direction is one example of "extending direction" of the present disclosure.

Foam layer 741 includes a portion 741a and a portion 741b. Portion 741a is stacked on portion 741b on the Z1 side of portion 741b. Portion 741a and portion 741b are examples of "second portion" and "first portion" of the present disclosure, respectively.

Foam layer 742 includes a portion 742a and a portion 742b. Portion 742a is stacked on portion 742b on the Z1 side of portion 742b. Upper end portion 92c of upper portion 92b is covered with part of portion 742a from the Z1 side. Portion 742a and portion 742b are examples of "fourth portion" and "third portion" of the present disclosure, respectively.

Portion 741a is disposed at the same position as portion 742a in the Z direction. Portion 741b is disposed at the same position as portion 742b in the Z direction. Therefore, portion 741b is disposed at a position displaced from portion 742a in the Z direction. Portion 741b may be disposed at a position that does not overlap portion 742a in the Y direction.

Connecting portion 95 has a portion 95a and a portion 95b located side by side in the Z direction. Portion 95a is sandwiched between portion 741a and portion 742a in the Y direction. Portion 95b is sandwiched between portion 741b and portion 742b in the Y direction.

The density of microcapsules 140a in portion 741b is higher than the density of microcapsules 140a in portion 741a. The density of microcapsules 140a in portion 742a is higher than the density of microcapsules 140a in portion 742b.

This allows the amount of expansion of portion 741b to be larger than the amount of expansion of portion 741a, and allows the amount of expansion of portion 742a to be larger than the amount of expansion of portion 742b. This allows a direction in which a force is applied to portion 95a of connecting portion 95 to be opposite to a direction in which a force is applied to portion 95b of connecting portion 95. As a result, tensile stress can be applied to connecting portion 95, so that connecting portion 95 can be readily cut.

The density of microcapsules 140a in portion 742a is higher than the density of microcapsules 140a in portion 741a. The density of microcapsules 140a in portion 741b is higher than the density of microcapsules 140a in portion 742b. The density of microcapsules 140a in portion 741a may be equal to the density of microcapsules 140a in portion 742b. The density of microcapsules 140a in portion 741b may be equal to the density of microcapsules 140a in portion 742a.

The density of microcapsules 140a may be uniform in each of portions 741a, 741b, 742a and 742b.

Portion 741a is provided separately from portion 741b, and portion 742a is provided separately from portion 742b. Portion 741a and portion 741b may be integrally formed. Portion 742a and portion 742b may be integrally formed. In a foam layer having portion 741a and portion 741b integrally formed therein, the density of microcapsules 140a may increase with a decreasing distance from a Z2-side portion. In a foam layer having portion 742a and portion 742b integrally formed therein, the density of microcapsules 140a may increase with a decreasing distance from a Z1-side portion.

Although foam layer 240 is disposed only on one side in the Y direction with respect to the plurality of first tabs 90A in each electrode body 10 in the example described in the above second embodiment, the present disclosure is not limited as such. The foam layers may be disposed on both sides in the Y direction with respect to the plurality of first tabs 90A in each electrode body 10.

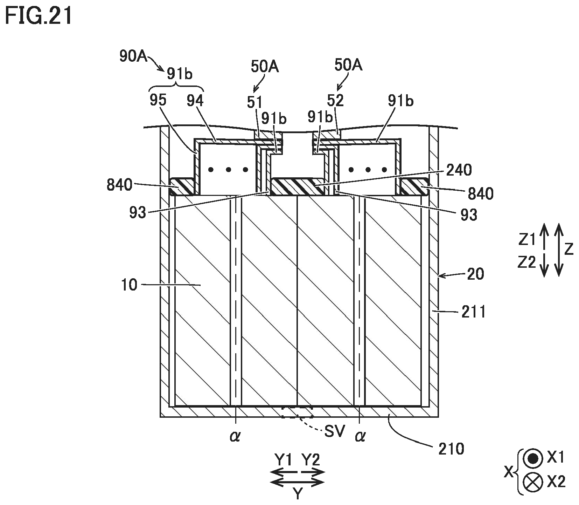

In an example shown in Fig. 21, a foam layer 840 is added to the configuration of the above second embodiment. Foam layer 840 is disposed between the plurality of first tabs 90A in each electrode body 10 and peripheral wall 211 of case 20. That is, foam layer 840 is sandwiched between first tab 90A that is closest to peripheral wall 211 of the plurality of first tabs 90A in each electrode body 10 and peripheral wall 211.

Although foam layer 140 is in contact with only portion 94 in the example described in the above first embodiment, and foam layer 240 is in contact with only connecting portion 95 in the example described in the above second embodiment, the present disclosure is not limited as such. The foam layer may be in contact with both portion 94 and connecting portion 95.

Although no foam layer is provided between first tabs 90A arranged in the Y direction in each electrode body 10 in the example described in the above second embodiment, the present disclosure is not limited as such. A foam layer may be provided between first tabs 90A arranged in the Y direction in each electrode body 10.

Although tab 901 and tab 902 are alternately disposed in the A direction in the example described in the above second embodiment, the present disclosure is not limited as such. First tab 90A may include only one of tab 901 and tab 902.

Although fire extinguishing gas 140c included in microcapsule 140a is carbon dioxide in the examples described in the above first and second embodiments, the present disclosure is not limited as such. Microcapsule 140a may contain (include) a gas (e.g., nitrogen) suitable for extinguishing fire other than carbon dioxide. A fire extinguishing gas which is a mixture of a plurality of types of gases (e.g., a mixed gas of carbon dioxide, nitrogen, and argon) may be included in microcapsule 140a.

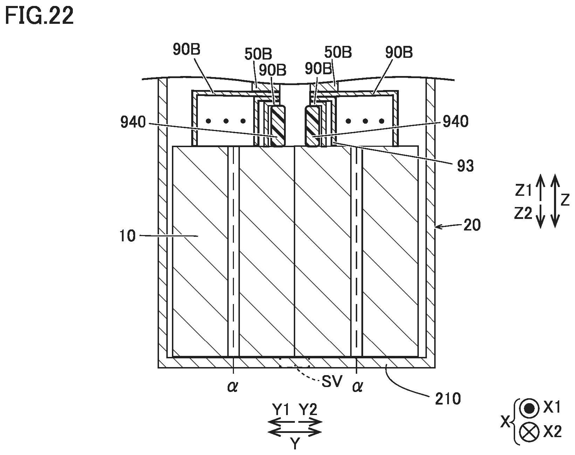

Although foam layer 140 (240) that supports first tab 90A of first electrode 10A is provided in the examples described in the above first and second embodiments, the present disclosure is not limited as such. A foam layer that supports second tab 90B of second electrode 10B may be provided. Fig. 22 shows an exemplary foam layer 940 that supports second tab 90B.

The configurations of the embodiments and modifications described above may be combined with each other.

Although the embodiments of the present disclosure have been described, it should be understood that the embodiments disclosed herein are illustrative and non-restrictive in every respect. The scope of the present disclosure is defined by the terms of the claims.

## Claims

1. A power storage cell (100, 200) comprising:
an electrode body (10) including an electrode sheet (10A, 10B);
a current collector plate (50A, 50B) disposed at a position facing the electrode body (10);
at least one electrode tab (90A, 90B) that electrically connects the electrode sheet (10A, 10B) to the current collector plate (50A, 50B); and
a foam layer (140, 240, 340, 440, 540, 640, 740, 840, 940) including a foam body (140a), wherein
the foam layer (140, 240, 340, 440, 540, 640, 740, 840, 940) supports the at least one electrode tab (90A, 90B) by being in contact with the at least one electrode tab (90A, 90B),
**characterized in that**
the foam body (140a) includes a fire extinguishing gas (140c).

2. The power storage cell according to claim 1, wherein
the foam layer (340, 440) includes
a one side portion (342, 441b, 442b), and
an other side portion (341, 441a, 442a) provided closer to the at least one electrode tab than the one side portion, and
a density of the foam body in the other side portion is higher than a density of the foam body in the one side portion.

3. The power storage cell according to claim 1 or 2, wherein
the foam layer (540, 640) includes
a first side portion (542, 641b, 642b), and
a second side portion (541, 641a, 642a) provided closer to the at least one electrode tab than the first side portion, and
a density of the foam body in the first side portion is higher than a density of the foam body in the second side portion.

4. The power storage cell according to any one of claims 1 to 3, wherein
the foam layer (740) includes a first foam layer (741) and a second foam layer (742) that sandwich the at least one electrode tab between them,
assuming that a direction in which each of the first foam layer and the second foam layer extends along the at least one electrode tab is defined as an extending direction,
the first foam layer has a first portion (741b), and a second portion (741a) provided on one side in the extending direction with respect to the first portion, and
the second foam layer has a third portion (742b), and a fourth portion (742a) provided on the one side in the extending direction with respect to the third portion and disposed at a position displaced from the first portion in the extending direction,
a density of the foam body in the first portion is higher than a density of the foam body in the second portion, and
a density of the foam body in the fourth portion is higher than a density of the foam body in the third portion.

5. The power storage cell according to any one of claims 1 to 3, further comprising a case (20) that contains the electrode body, wherein
an exhaust valve (SV) is provided on a wall portion (210) of the case, and
the exhaust valve is disposed opposite to the foam layer with respect to the electrode body.
